# DEMANDE DE BREVET EUROPEEN

(11) **EP 1 161 005 A1**
(43) Date de publication de la demande: **05.12.2001**
(21) Numéro de dépôt: 01401321.3
(22) Date de dépôt: 21.05.2001
(51) Int. Cl.: H04B 7/26, H04Q 7/36

(54) **Procédé de synchronisation d'au moins deux interfaces**

(30) Priorité: 30.05.2000 FR 0006932
(71) Demandeur: ALCATEL, 75008 Paris (FR)
(72) Inventeur: Desblancs, Philippe, 75015 Paris (FR); Redondo, Frédéric, 92330 Sceaux (FR)
(74) Mandataire: Fournier, Michel

(57) **Abrégé**

La présente invention a pour objet un procédé de synchronisation du fonctionnement d'au moins deux interfaces partageant un même moyen ou une même ressource à des fins de communication.

Procédé caractérisé en ce que les intervalles de fonctionnement des différentes interfaces (1, 1'), notamment d'utilisation de la ressource commune, sont non chevauchants.

## Description

La présente invention concerne le domaine de la mise en communication de plusieurs systèmes utilisant un mode de communication similaire et a pour principal objet un procédé de synchronisation d'au moins deux interfaces utilisant une même ressource de communication.

De nombreux systèmes de transmission ou dispositifs de communication sont construits autour de ou sont reliés à plusieurs interfaces d'émission-réception pour l'établissement de liaisons de communication ou de connexions de transmission bidirectionnelles ou non, chacune avec un(e) ou plusieurs autres dispositifs, stations ou systèmes, organisé(e)s éventuellement en réseaux.

Dans certaines réalisations, ces interfaces sont amenées à partager entre elles l'utilisation d'un unique moyen ou d'une même ressource de communication. Tel est notamment le cas lorsque les interfaces sont toutes des interfaces "air" ou interfaces de communication par voie radio.

Il est alors nécessaire d'assurer une compatibilité d'usage de cette ressource commune, en terme d'accès, d'utilisation effective et de libération, en vue d'éviter toute interaction ou interférence entre les différentes interfaces, qui serait néfaste aux connexions ou liaisons impliquant lesdites différentes interfaces.

La solution la plus aisée à mettre en oeuvre, et la plus évidente, pour aboutir à la compatibilité d'usage, consiste à faire coexister et fonctionner lesdites interfaces indépendamment les unes des autres.

Dans le cas d'un système ou dispositif comprenant plusieurs interfaces air, il y a lieu d'assurer la compatibilité électromagnétique mutuelle desdites interfaces amenées à utiliser la ressource radio commune, et ce à tout instant.

Actuellement, cette compatibilité est obtenue soit en utilisant des bandes de fréquences différentes au niveau des diverses interfaces, suffisamment éloignées les unes des autres dans le spectre radio pour autoriser des émissions/réceptions simultanées par lesdites interfaces, soit en concevant lesdites interfaces de telle manière que les éventuelles interactions ou interférences provoquées par les autres interfaces soient atténuées ou filtrées.

Néanmoins, ces solutions existantes ne sont pas satisfaisantes puisqu'elles présentent toutes des limitations et/ou des inconvénients important(e)s.

Aussi, l'utilisation de bandes de fréquences mutuellement éloignées pose le problème de la disponibilité de telles bandes, répondant à ces critères et adaptées aux interfaces considérées, et conduit en fait à la création de ressources multiples (une par interface), chaque bande de fréquences devant être considérée comme une ressource radio distincte, et non plus au partage d'une ressource commune unique.

En outre, le surcoût induit par les filtrages réciproques des éventuelles interférences entre les différentes interfaces peut s'avérer important et incompatible avec des produits destinés aux particuliers ou au grand public, tels que par exemple une station de base d'un réseau local du type CTS intégrant une interface de connexion à un réseau public de télécommunication hertzienne.

Par ailleurs, compte tenu de leur constitution et/ou de leur mode de fonctionnement, certains systèmes ou dispositifs de communication ne peuvent supporter des accès indépendants, ni permettre l'utilisation indépendante, par plusieurs interfaces distinctes, d'une ressource commune.

La présente invention a notamment pour but de pallier les inconvénients précités.

A cet effet, elle a pour objet un procédé de synchronisation du fonctionnement d'au moins deux interfaces partageant un même moyen ou une même ressource à des fins de communication, dans lequel les intervalles de fonctionnement des différentes interfaces, notamment d'utilisation de la ressource commune, sont non chevauchants.

Au moins deux interfaces externes réalisant chacune l'interfaçage avec un réseau de communication correspondant et pouvant assurer par interconnexion une liaison à transmission bidirectionnelle entre les deux réseaux, ces derniers comprenant chacun une ou plusieurs, préférentiellement une pluralité, d'unités ou de stations mobiles ou fixes, procédé caractérisé en ce qu'il consiste :
- à rendre l'une des interfaces maîtresse par rapport aux autres unités ou stations fixes ou mobiles faisant partie du réseau qui lui est attaché et à rendre l'autre interface esclave du réseau dont elle dépend et auquel elle peut être reliée
- à rendre le fonctionnement de l'interface maîtresse dépendant de l'interface esclave
- et à attribuer à chaque interface des intervalles temporels propres d'utilisation de la ressource commune et à imposer à l'interface maîtresse et au réseau correspondant le temps ou l'heure du réseau de l'interface esclave.

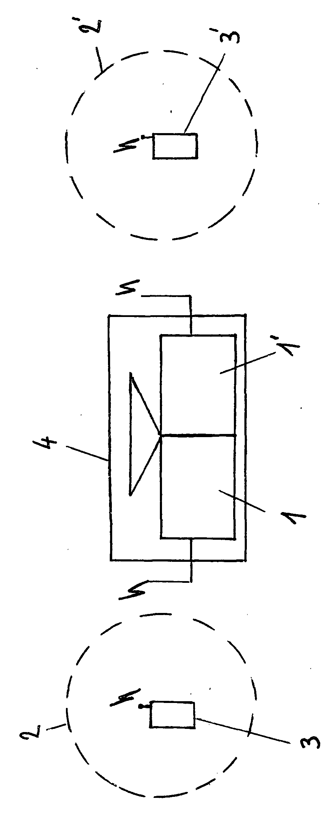

L'invention sera mieux comprise, grâce à la description ci-après, qui se rapporte à un mode de réalisation préféré, donné à titre d'exemple non limitatif, et expliqué avec référence au dessin schématique annexé, dans lequel la figure unique représente de manière schématique un dispositif de communication intégrant deux interfaces utilisant en commun la ressource radio.

Conformément à l'invention, le procédé de synchronisation du fonctionnement d'au moins deux interfaces partageant un même moyen ou une même ressource à des fins de communication est caractérisé en ce que les intervalles de fonctionnement des différentes interfaces 1, 1', notamment d'utilisation de la ressource commune, sont non chevauchants.

Le principe à la base de la présente invention réside dans l'instauration d'une dépendance de fonctionnement entre les différentes interfaces 1, 1' par l'intermédiaire de l'attribution d'intervalles d'utilisation de la ressource commune différents, résultant en une synchronisation de ladite utilisation partagée évitant tout conflit d'accès à ladite ressource et d'utilisation de cette dernière, sans diminuer les performances de chacune desdites interfaces 1, 1'.

On notera que le domaine d'application du principe de base de l'invention est très vaste et peut comprendre tout type d'interfaces et tout type ou toute nature de ressource commune.

En outre, bien que décrit plus particulièrement dans la présente en relation avec la synchronisation de deux interfaces, son application à la synchronisation de trois ou plus en découle de manière évidente pour l'homme du métier.

Un mode de réalisation préféré, mais non limitatif, peut avantageusement trouver application lorsque l'on est en présence d'au moins deux interfaces externes 1, 1' réalisant chacune l'interfaçage avec un réseau de communication 2, 2' correspondant et pouvant assurer par interconnexion une liaison à transmission bidirectionnelle entre lesdits deux réseaux, ces derniers comprenant chacun une ou plusieurs, préférentiellement une pluralité, d'unités ou de stations mobiles et/ou fixes 3, 3'.

Dans ce cas, ledit procédé de synchronisation peut avantageusement consister :
- à rendre l'une 1 des interfaces 1, 1' maîtresse par rapport aux autres unités ou stations fixes ou mobiles 3 faisant partie du réseau 2 qui lui est attaché et à rendre l'autre interface 1' esclave du réseau 2' dont elle dépend et auquel elle peut être reliée
- à rendre le fonctionnement de l'interface maîtresse 1 dépendant de l'interface esclave 1'
- et à attribuer à chaque interface 1, 1' des intervalles temporels propres d'utilisation de la ressource commune et à imposer à l'interface maîtresse 1, et au réseau 2 correspondant, le temps ou l'heure du réseau 2' de l'interface esclave 1'.

Comme le montre la figure du dessin annexé, il peut être prévu que les deux interfaces 1 et 1' fassent partie d'un même dispositif de communication 4 formant la ou une station de base fixe au moins pour le réseau 2 correspondant à l'interface maîtresse 1.

Préférentiellement, les deux réseaux 2, 2' interconnectés par l'intermédiaire desdites deux interfaces 1, 1' consistent en des réseaux du type à accès multiple à répartition dans le temps (TDMA).

Compte tenu des événements non prévisibles pouvant affecter la ressource commune ou des requêtes pouvant transiter à tout moment par cette dernière (par exemple requête de mise en communication entre composantes des deux réseaux) et pour conserver en toute circonstance la relation de dépendance entre les deux interfaces 1, 1', la synchronisation temporelle entre ces dernières est maintenue lorsque la ressource commune n'est pas utilisée, et notamment en l'absence de communication entre les deux réseaux 2 et 2'.

En particulier, lorsque le réseau 2' duquel dépend l'interface esclave 1' consiste en un réseau cellulaire, un changement de cellule résulte généralement en une modification de l'heure ou du temps de ladite interface esclave 1' et, par conséquent, en une modification de l'heure de l'interface maîtresse 1 et de son réseau 2 affilié, par transmission d'informations relatives à l'heure dudit réseau affilié 2'.

De manière générale, la synchronisation temporelle des deux interfaces 1, 1' est établie ou mise à jour lors de l'établissement d'une voie de communication entre les deux réseaux 2, 2' par l'intermédiaire de ces interfaces 1, 1', une nouvelle mise à jour de la synchronisation durant une communication étant éventuellement effectuée par modification du temps et/ou des intervalles temporels affecté(s) à l'interface maîtresse 1, lors d'un changement de connexion de l'interface esclave l'dans le réseau 2' auquel elle est affiliée, soit par modification de la voie ou d'un intermédiaire de connexion ou par changement de l'unité ou de la station du réseau 2' à laquelle elle est connectée.

Conformément à une caractéristique de l'invention, le procédé de synchronisation consiste, en cas de demande de mise en communication émanant du réseau 2' auquel est affiliée l'interface esclave 1', à établir d'abord la connexion de la station fixe ou mobile demanderesse 3' avec ladite interface esclave 2' et à établir ensuite la connexion entre l'interface maîtresse 1 et la station mobile ou fixe destinataire 3 du réseau 2 correspondant, les intervalles temporels de la liaison interface maîtresse 1/réseau 2 étant compatibles avec les intervalles temporels imposés à l'interface esclave 1' par le réseau 2' auquel elle est affiliée, pour obtenir une synchronisation dans le temps des interfaces, notamment en ce qui concerne l'utilisation de la ressource commune.

Selon une première variante de réalisation de l'invention, le procédé peut consister, en cas de demande de mise en communication émanant d'une station fixe ou mobile 3 du réseau 2 dépendant de l'interface maîtresse 1, à requérir d'abord une mise en communication de l'interface esclave 1' avec l'unité ou la station mobile ou fixe destinataire 3' du réseau 2' auquel elle est affiliée puis, après réalisation de cette mise en communication, à établir la connexion entre l'interface maîtresse 1 et la station mobile ou fixe destinataire 3 du réseau 2 correspondant, les intervalles temporels de la liaison interface maîtresse 1/réseau 2 étant compatibles avec les intervalles temporels imposés à l'interface esclave 1' par le réseau 2' auquel elle est affiliée, pour obtenir une synchronisation dans le temps des interfaces, notamment en ce qui concerne l'utilisation de la ressource commune.

La demande de mise en communication émanant du réseau 2 est, par conséquent, traitée comme une demande émanant du réseau 2', la seule différence étant qu'elle est initiée par l'interface esclave 1'.

Selon une seconde variante de réalisation de l'invention, le procédé peut consister, en cas de demande de mise en communication émanant d'une station fixe ou mobile 3 du réseau 2 dépendant de l'interface maîtresse 1, à établir une première connexion entre ladite station fixe ou mobile demanderesse 3 et l'interface maîtresse 1, puis à établir une seconde connexion entre l'interface esclave 1' et la station mobile ou fixe destinataire 3' du réseau 2' auquel elle est affiliée et enfin à adapter ladite première connexion à ladite seconde connexion, en synchronisant notamment dans le temps l'utilisation de la ressource commune par lesdites interfaces 1, 1'.

Conformément à une application préférentielle de l'invention, le réseau associé à l'interface maîtresse 1 est un réseau local de téléphonie sans fil 2 comprenant au moins deux stations mobiles ou téléphones sans fil 3, préférentiellement du type connu sous la désignation CTS, et le réseau 2' associé à l'interface esclave 1' est un réseau de télécommunication radiofréquence cellulaire, préférentiellement du type connu sous la désignation GSM, l'interface esclave étant préférentiellement considérée par ledit réseau comme étant une station mobile affiliée à ce dernier.

Bien entendu, les réseaux ne sont pas limités aux réseaux GMS et CTS. Ils pourraient notamment être du type UMTS.

Les informations nécessaires pour l'implémentation d'une possible réalisation et d'un éventuel mode de fonctionnement pratiques d'un tel système d'interconnexion de réseaux, consistant à connecter la station de base 4 du réseau local CTS (comportant par exemple deux stations mobiles CTS1 et CTS2) au réseau cellulaire GSM 2' via l'interface air 1' de ladite station de base, sont notamment décrites dans les recommandations n° 03.56, 03.08, 05.56 et 05.10 (Versions 1999) de l'ETSI, étant rappelé qu'un tel système dérive du système connu d'interconnexion réseau local CTS/réseau téléphonique public commuté.

Le procédé de synchronisation a été décrit ci-dessus sur la base de la mise en relation d'une station d'un premier réseau avec une station d'un second réseau.

Or, il peut également trouver application lors de la mise en relation de deux stations d'un premier réseau avec une station d'un second réseau (fonctionnalité de la conférence à trois).

Le tableau ci-dessous présente, à titre d'exemple, l'attribution d'intervalles de temps (ou fenêtres temporelles) successifs de fonctionnement dans le cas de la mise en relation de deux stations mobiles CTS1 et CTS2 d'un réseau local CTS avec une station mobile d'un réseau GSM.

Dans ce tableau :
- Rx signifie réception
- Tx signifie émission
- "up" signifie "vers" ou "en direction de"
- "down" signifie "à partir de"

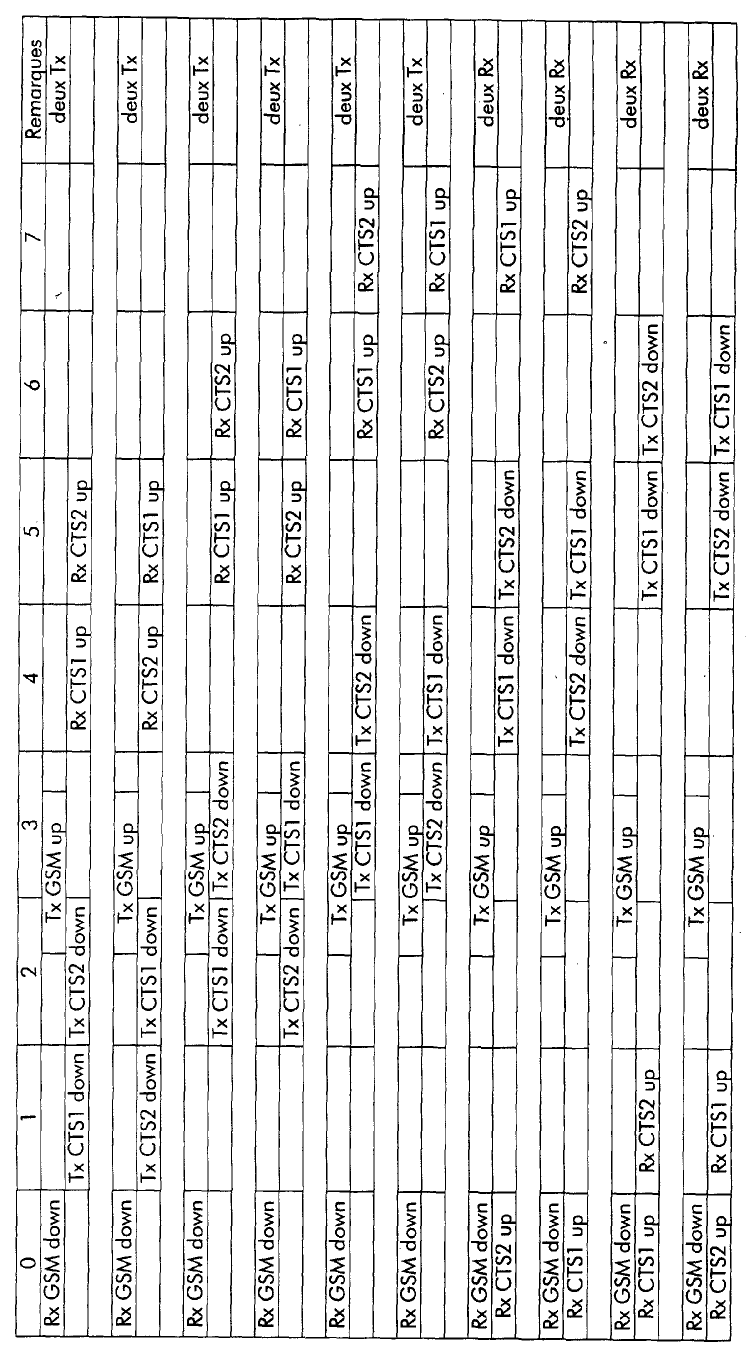

La présente invention a également pour objet un dispositif 4 d'interconnexion de deux réseaux de communication 2 et 2', comportant notamment deux interfaces externes d'émission/réception 1 et 1' partageant une même ressource, par exemple une ressource de communication radio, affectées chacune à l'interfaçage avec l'un des réseaux, caractérisé en ce que le fonctionnement des deux interfaces 1 et 1' est synchronisé suivant le procédé tel que décrit ci-dessus.

Selon un mode de réalisation préféré de l'invention, représenté schématiquement sur la figure du dessin annexé, le dispositif consiste, en cas de demande de mise en communication émanant d'une station fixe ou mobile 3 du réseau 2 dépendant de l'interface maîtresse 1, à établir une première connexion entre ladite station fixe ou mobile demanderesse 3 et l'interface maîtresse 1, puis à établir une seconde connexion entre l'interface esclave 1' et la station mobile ou fixe destinataire 3' du réseau 2' auquel elle est affiliée et enfin à adapter ladite première connexion à ladite seconde connexion, en synchronisant notamment dans le temps l'utilisation de la ressource commune par lesdites interfaces 1, 1', ledit dispositif 4 formant la station de base du réseau local de téléphone sans fil 2 et assurant la coopération fonctionnelle desdites deux interfaces 1 et 1'.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Procédé de synchronisation du fonctionnement d'au moins deux interfaces partageant un même moyen ou une même ressource à des fins de communication, les intervalles de fonctionnement des différentes interfaces (1, 1'), notamment d'utilisation de la ressource commune, étant non chevauchants, au moins deux interfaces externes (1, 1') réalisant chacune l'interfaçage avec un réseau de communication (2, 2') correspondant et pouvant assurer par interconnexion une liaison à transmission bidirectionnelle entre les deux réseaux, ces derniers comprenant chacun une ou plusieurs, préférentiellement une pluralité, d'unités ou de stations mobiles ou fixes (3, 3'), procédé **caractérisé en ce qu'**il consiste :
- à rendre l'une (1) des interfaces (1, 1') maîtresse par rapport aux autres unités ou stations fixes ou mobiles (3) faisant partie du réseau (2) qui lui est attaché et à rendre l'autre interface (1') esclave du réseau (2') dont elle dépend et auquel elle peut être reliée
- à rendre le fonctionnement de l'interface maîtresse (1) dépendant de l'interface esclave (1')
- et à attribuer à chaque interface (1, 1') des intervalles temporels propres d'utilisation de la ressource commune et à imposer à l'interface maîtresse (1) et au réseau (2) correspondant le temps ou l'heure du réseau (2') de l'interface esclave (1').

2. Procédé selon la revendication 1, **caractérisé en ce que** les deux interfaces (1, 1') font partie d'un même dispositif de communication (4) formant la ou une station de base fixe au moins pour le réseau (2) correspondant à l'interface maîtresse (1) et **en ce que** les deux réseaux (2, 2') interconnectés par l'intermédiaire desdites deux interfaces (1, 1') consistent en des réseaux du type à accès multiple à répartition dans le temps (TDMA).

3. Procédé selon l'une quelconque des revendications 1 et 2, **caractérisé en ce que** la synchronisation temporelle des deux interfaces (1 et 1') est maintenue lorsque la ressource commune n'est pas utilisée, et notamment en l'absence de communication entre les deux réseaux (2, 2').

4. Procédé selon l'une quelconque des revendications 1 à 3, **caractérisé en ce que** la synchronisation temporelle des deux interfaces (1, 1') est établie ou mise à jour lors de l'établissement d'une voie de communication entre les deux réseaux (2, 2') par l'intermédiaire de ces interfaces (1, i'), une nouvelle mise à jour de la synchronisation durant une communication étant éventuellement effectuée par modification du temps et/ou des intervalles temporels affecté(s) à l'interface maîtresse (1), lors d'un changement de connexion de l'interface esclave (1') dans le réseau (2') auquel elle est affiliée.

5. Procédé selon l'une quelconque des revendications 1 à 4, **caractérisé en ce qu'**il consiste, en cas de demande de mise en communication émanant du réseau (2') auquel est affiliée l'interface esclave (1'), à établir d'abord la connexion de la station fixe ou mobile demanderesse (3') avec ladite interface esclave (2') et à établir ensuite la connexion entre l'interface maîtresse (1) et la station mobile ou fixe destinataire (3) du réseau (2) correspondant, les intervalles temporels de la liaison interface maîtresse (1)/réseau (2) étant compatibles avec les intervalles temporels imposés à l'interface esclave (1') par le réseau (2') auquel elle est affiliée, pour obtenir une synchronisation dans le temps des interfaces, notamment en ce qui concerne l'utilisation de la ressource commune.

6. Procédé selon l'une quelconque des revendications 1 à 5, **caractérisé en ce qu'**il consiste, en cas de demande de mise en communication émanant d'une station fixe ou mobile (3) du réseau (2) dépendant de l'interface maîtresse (1), à requérir d'abord une mise en communication de l'interface esclave (1') avec l'unité ou la station mobile ou fixe destinataire (3') du réseau (2') auquel elle est affiliée puis, après réalisation de cette mise en communication, à établir la connexion entre l'interface maîtresse (1) et la station mobile ou fixe destinataire (3) du réseau (2) correspondant, les intervalles temporels de la liaison interface maîtresse (1)/réseau (2) étant compatibles avec les intervalles temporels imposés à l'interface esclave (1') par le réseau (2') auquel elle est affiliée, pour obtenir une synchronisation dans le temps des interfaces, notamment en ce qui concerne l'utilisation de la ressource commune.

7. Procédé selon l'une quelconque des revendications 1 à 5, **caractérisé en ce qu'**il consiste, en cas de demande de mise en communication émanant d'une station fixe ou mobile (3) du réseau (2) dépendant de l'interface maîtresse (1), à établir une première connexion entre ladite station fixe ou mobile demanderesse (3) et l'interface maîtresse (1), puis à établir une seconde connexion entre l'interface esclave (1') et la station mobile ou fixe destinataire (3') du réseau (2') auquel elle est affiliée et enfin à adapter ladite première connexion à ladite seconde connexion, en synchronisant notamment dans le temps l'utilisation de la ressource commune par lesdites interfaces (1, 1').

8. Procédé selon l'une quelconque des revendications 1 à 7, **caractérisé en ce que** le réseau associé à l'interface maîtresse est un réseau local de téléphonie sans fil comprenant au moins deux stations mobiles ou téléphones sans fil, préférentiellement du type connu sous la désignation CTS, et **en ce que** le réseau associé à l'interface esclave est un réseau de télécommunication radiofréquence cellulaire, préférentiellement du type connu sous la désignation GSM, l'interface esclave étant préférentiellement considérée par ledit réseau comme étant une station mobile affiliée à ce dernier.

9. Dispositif d'interconnexion de deux réseaux de communication, comportant notamment deux interfaces externes d'émission réception partageant une même ressource, par exemple une ressource de communication radio, affectées chacune à l'interfaçage avec l'un des réseaux, **caractérisé en ce que** le fonctionnement des deux interfaces (1 et 1') est synchronisé suivant le procédé selon l'une quelconque des revendications 1 à 8.

10. Dispositif selon la revendication 9, **caractérisé en ce qu'**il consiste, en cas de demande de mise en communication émanant d'une station fixe ou mobile (3) du réseau (2) dépendant de l'interface maîtresse (1), à établir une première connexion entre ladite station fixe ou mobile demanderesse (3) et l'interface maîtresse (1), puis à établir une seconde connexion entre l'interface esclave (1') et la station mobile ou fixe destinataire (3') du réseau (2') auquel elle est affiliée et enfin à adapter ladite première connexion à ladite seconde connexion, en synchronisant notamment dans le temps l'utilisation de la ressource commune par lesdites interfaces (1, 1'), ledit dispositif (4) formant la station de base du réseau local de téléphone sans fil (2) et assurant la coopération fonctionnelle desdites deux interfaces (1 et 1').
